# EUROPEAN PATENT APPLICATION

(11) **EP 3 076 700 A1**
(43) Date of publication of application: **05.10.2016**
(21) Application number: 14865298.5
(22) Date of filing: 25.11.2014
(51) Int. Cl.: H04W 24/02, H04M 3/00, H04W 52/02, H04W 92/20

(54) **COMMUNICATION CONTROL METHOD AND BASE STATION**

(30) Priority: 27.11.2013 JP 2013245472
(71) Applicant: Kyocera Corporation, Kyoto-shi, Kyoto 612-8501 (JP)
(72) Inventor: NAGASAKA, Yushi, Kyoto-shi Kyoto 612-8501 (JP); MORITA, Kugo, Kyoto-shi Kyoto 612-8501 (JP)
(74) Representative: Schwabe - Sandmair - Marx
(86) International application number: PCT/JP2014/081049
(87) International publication number: WO 2015/080080

(57) **Abstract**

A communication control method according to the present embodiment is used in a mobile communication system having an OFF target base station that intends to set an OFF target cell to OFF that is a cell of the OFF target base station, and an extension target base station that is to perform a cell extension for compensating the OFF target cell. The communication control method comprises: a step of transmitting, by the OFF target base station, list information to the extension target base station before the cell extension is performed, the list information being maintained in the OFF target base station and being used when the OFF target cell is managed; and an management step of managing, by the extension target base station, an extension target cell whose coverage is extended, on a basis of the list information.

## Description

### TECHNICAL FIELD

The present invention relates to a communication control method and a base station used in a mobile communication system.

### BACKGROUND ART

According to 3GPP (3rd Generation Partnership Project), which is a project aiming to standardize a mobile communication system, a technology for power saving (energy saving), which reduces the power consumption of a network, has been introduced (for example, see Non Patent Document 1). For example, a cell managed by a base station is set to OFF (Deactivate) in the nighttime etc. when communication traffic is less.

Furthermore, according to the 3 GPP, in Release 12 and later, an improved energy saving technology is proposed to be introduced. For example, when setting one cell to OFF, transmission power of a neighboring cell is caused to be increased. As a result, it is possible to extend a coverage of the neighboring cell (cell extension) and to compensate a coverage of a cell set to OFF (area compensation).

### PRIOR ART DOCUMENT

### NON-PATENT DOCUMENT

Non Patent Document 1: 3GPP technical report "TR 36.927 V11.0.0" September, 2012

### SUMMARY OF THE INVENTION

Since a base station that manages an extended cell starts managing a new range of area compensation, the status of the range of area compensation is not understood. Therefore, the base station is not capable of appropriately managing a cell with an extended coverage, which poses the threat of a decline in network efficiency.

Thus, an object of the present invention is to provide a communication control method and a base station by which it is possible to restrain a decline in network efficiency when an energy saving technology is introduced.

### MEANS FOR SOLVING THE PROBLEM

A communication control method according to an embodiment is used in a mobile communication system having an OFF target base station that intends to set an OFF target cell to OFF that is a cell of the OFF target base station, and an extension target base station that is to perform a cell extension for compensating the OFF target cell. The communication control method comprises: a step of transmitting, by the OFF target base station, list information to the extension target base station before the cell extension is performed, the list information being maintained in the OFF target base station and being used when the OFF target cell is managed; and an management step of managing, by the extension target base station, an extension target cell whose coverage is extended, on a basis of the list information.

### BRIEF DESCRIPTION OF THE DRAWINGS

[Fig. 1] Fig. 1 is a configuration diagram of an LTE system.
[Fig. 2] Fig. 2 is a block diagram of a UE.
[Fig. 3] Fig. 3 is a block diagram of an eNB.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 is a diagram showing a data path in cellular communication.
[Fig. 7] Fig. 7 is a diagram showing a data path in D2D communication.
[Fig. 8] Fig. 8 is a sequence diagram for describing an operation of deletion from a fixed UE list according to the present embodiment.
[Fig. 9] Fig. 9 is a flowchart for describing the operation of deletion from the fixed UE list according to the present embodiment.
[Fig. 10] Fig. 10 is an explanatory diagram for describing an operation environment of a mobile communication system according to a first embodiment.
[Fig. 11] Fig. 11 is a sequence diagram for describing an operation at the time of starting energy saving according to the first embodiment.
[Fig. 12] Fig. 12 is a flowchart for describing an operation at the time of ending energy saving according to the first embodiment.
[Fig. 13] Fig. 13 is an explanatory diagram for describing an operation according to a modification of the present embodiment.
[Fig. 14] Fig. 14 is a sequence (part 1) for describing an operation of an eNB 200 according to a second embodiment.
[Fig. 15] Fig. 15 is a sequence (part 2) for describing an operation of the eNB 200 according to the second embodiment.
[Fig. 16] Fig. 16 is an explanatory diagram for describing an operation of a UE 101 according to the second embodiment.
[Fig. 17] Fig. 17 is an explanatory diagram for describing an operation of the UE 101 according to the second embodiment.
[Fig. 18] Fig. 18 is a sequence diagram for describing an operation of the UE 101 according to the second embodiment.
[Fig. 19] Fig. 19 is a sequence diagram for describing an operation of the UE 101 according to the second embodiment.

### DESCRIPTION OF THE EMBODIMENT

### [Overview of Embodiment]

A communication control method according to an embodiment is used in a mobile communication system having an OFF target base station that intends to set an OFF target cell to OFF that is a cell of the OFF target base station, and an extension target base station that is to perform a cell extension for compensating the OFF target cell. The communication control method comprises: a step of transmitting, by the OFF target base station, list information to the extension target base station before the cell extension is performed, the list information being maintained in the OFF target base station and being used when the OFF target cell is managed; and an management step of managing, by the extension target base station, an extension target cell whose coverage is extended, on a basis of the list information.

In the embodiment, the list information is information indicating a list that is broadcast or unicast within a coverage of the OFF target cell by the OFF target base station, and the management step includes a step of broadcasting or unicasting, by the extension target base station, the list information within a coverage of the extension target cell.

The communication control method according to the embodiment further comprises: a step of deleting the list information or returning the list information to the OFF target base station, by the extension target base station, after the management step ends.

In the embodiment, the management step includes a step of updating the list information by the extension target base station. The communication control method further comprises a step of maintaining, by the extension target base station, the list information updated for a next cell extension, after the management step ends.

In the embodiment, the list information is information indicating a list concerning a fixed node whose location is fixed and which exists in the OFF target cell.

In the embodiment, the management step comprises: a step of confirming, by the extension target base station, whether or not a fixed node registered in the list information is present within the coverage of the extension target cell, and a step of deleting, by the extension target base station, information of a fixed node that is registered in the list information and is not present within the coverage of the extension target cell.

In the embodiment, the fixed node is a wireless LAN access point, or a fixed-type user terminal configured to transmit information by using a D2D proximity service.

In the embodiment, the fixed node is a fixed-type user terminal whose movement is restricted. The communication control method further comprises: a step of receiving, by the OFF target base station, from a user terminal that exists in the OFF target cell, capability information including information by which it is possible to determine whether or not the user terminal is a fixed-type user terminal; a determination step of determining, by the OFF target base station, whether or not the user terminal is the fixed-type user terminal, on a basis of the capability information received from the user terminal; and a step of updating, by the OFF target base station, a list concerning the fixed-type user terminal, on a basis of a determination result of the determination step.

The communication control method according to the embodiment further comprises: a determination step of determining, by the OFF target base station, that a user terminal that continues to exist in the OFF target cell until the OFF target cell is set to OFF, and in which the number of handover to the OFF target cell exceeds a threshold value when an OFF state of the OFF target cell ends, is a fixed-type user terminal whose movement is restricted; and a step of updating, by the OFF target base station, a list concerning the fixed-type user terminal, on a basis of a determination result of the determination step.

The communication control method according to the embodiment further comprises: a determination step of determining, by the extension target base station, that a user terminal that continues to exist in the extension target cell during the time the extension target cell is extending, and in which the number of handover to the extension target cell exceeds a threshold value when the extension target cell is extended, is a fixed-type user terminal whose movement is restricted. In the management step, the extension target base station updates a list concerning the fixed-type user terminals on a basis of a determination result of the determination step.

The communication control method according to the embodiment further comprises: a step of transmitting, by the OFF target base station, user information concerning a user terminal that exists in the OFF target cell before the cell extension is performed; and a reserving step of reserving, by the extension target base station, for the user terminal, a resource for the extension target cell used after the cell extension is performed, on a basis of the user information.

The communication control method according to the embodiment further comprises: a step of receiving, by the user terminal, the resource for the extension target cell, before the OFF target cell is set to OFF; and an operation step of performing an operation, by the user terminal, by using the resource for the extension target cell, after the extension target cell is extended and during the time the user terminal exists in the extension target cell.

In the embodiment, the resource for the extension target cell is a temporary identifier used for identifying the user terminal within the coverage of the extension target cell, and in the operation step, if the user terminal exists in the extension target cell after the extension target cell is extended, the user terminal skips a random access procedure for establishing a connection to the extension target cell and performs an operation by using the temporary identifier.

In the embodiment, the resource for the extension target cell is discovery information used in a process of discovering a partner terminal in a D2D proximity service, and in the operation step, if the user terminal exists in the extension target cell after the extension target cell is extended, the user terminal starts the process of discovering on a basis of the discovery information, without a connection to the extension target cell.

The communication control method according to the embodiment further comprises: a step of associating and storing, by the user terminal, a resource for the OFF target cell that is allocated from the OFF target base station before the OFF target cell is set to OFF, together with the resource for the extension target cell; and a step of performing an operation, by the user terminal, by using the resource for the OFF target cell, when the user terminal again exists in the OFF target cell after the extension of the extension target cell ends.

In the embodiment, the resource for the extension target cell is a resource common to a resource for the OFF target cell that is allocated to the user terminal from the OFF target base station before the OFF target cell is set to OFF.

The communication control method according to the embodiment further comprises: a step of separating beforehand before the reserving step, by the OFF target base station and the extension target base station, the range available for allocating a resource for the OFF target cell and the range available for allocating the resource for the extension target cell, in order to prevent overlapping of the resource for the OFF target cell that is allocated to the user terminal from the OFF target base station, and the resource for the extension target cell.

The communication control method according to the embodiment further comprises: a step of receiving, by at least one of the OFF target base station and the extension target base station, from a network, information indicating at least one of the range available for allocating the resource for the OFF target cell and the range available for allocating the resource for the extension target cell.

In the embodiment, the user terminal is a fixed-type user terminal whose movement is restricted.

The communication control method according to the embodiment further comprises: a step of selecting, by the OFF target base station, as the extension target base station, a base station that is controlled by a movement management entity configured to control the OFF target base station, or a base station that belongs to the same tracking area as the OFF target base station.

A base station according to the embodiment is configured to be used in a mobile communication system having an OFF target base station that intends to set an OFF target cell to OFF that is a cell of the OFF target base station, and an extension target base station that is to perform a cell extension for compensating the OFF target cell, and corresponds to the OFF target base station. The base station comprises: a transmitter configured to transmit, by the OFF target base station, list information to the extension target base station before the cell extension is performed, the list information being maintained in the OFF target base station and being used when the OFF target cell is managed. The list information is used by the extension target base station when an extension target cell whose coverage is extended is managed.

A base station configured to be used in a mobile communication system having an OFF target base station that intends to set an OFF target cell to OFF that is a cell of the OFF target base station, and an extension target base station that is to perform a cell extension for compensating the OFF target cell, and corresponds to the extension target base station. The base station comprises: a receiver configured to receive list information from the OFF target base station before the cell extension is performed, the list information being maintained in the OFF target base station and being used when the OFF target cell is managed; and a controller configured to manage, on a basis of the list information, an extension target cell whose coverage is extended.

### [First Embodiment]

### (LTE system)

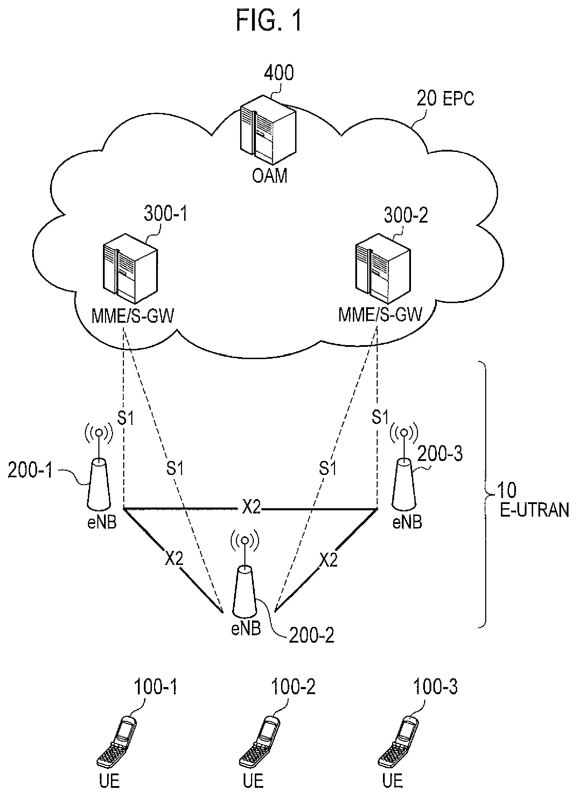

Fig. 1 is a configuration diagram of an LTE system according to the present embodiment.

As illustrated in Fig. 1, the LTE system includes a plurality of UEs (User Equipments) 100, E-UTRAN (Evolved Universal Terrestrial Radio Access Network) 10, and EPC (Evolved Packet Core) 20. The E-UTRAN 10 and the EPC 20 constitute a network.

The UE 100 is a mobile radio communication apparatus and performs radio communication with a cell (a serving cell) with which a connection is established. The UE 100 corresponds to the user terminal.

The E-UTRAN 10 includes a plurality of eNBs 200 (evolved Node-Bs). The eNB 200 corresponds to a base station. The eNB 200 controls a cell and performs radio communication with the UE 100 that establishes a connection with the cell.

It is noted that the "cell" is used as a term indicating a minimum unit of a radio communication area, and is also used as a term indicating a function of performing radio communication with the UE 100.

The eNB 200, for example, has a radio resource management (RRM) function, a routing function of user data, and a measurement control function for mobility control and scheduling.

The EPC 20 includes MMEs (Mobility Management Entities)/S-GWs (Serving-Gateways) 300, and OAM 400 (Operation and Maintenance). Further, the EPC 20 corresponds to a core network.

The MME is a network node for performing various mobility controls, etc., for the UE 100 and corresponds to a controller. The S-GW is a network node that performs transfer control of user data and corresponds to a mobile switching center.

The OAM 400 is a server device managed by an operator and performs maintenance and monitoring of the E-UTRAN 10.

Next, the configurations of the UE 100 and the eNB 200 will be described.

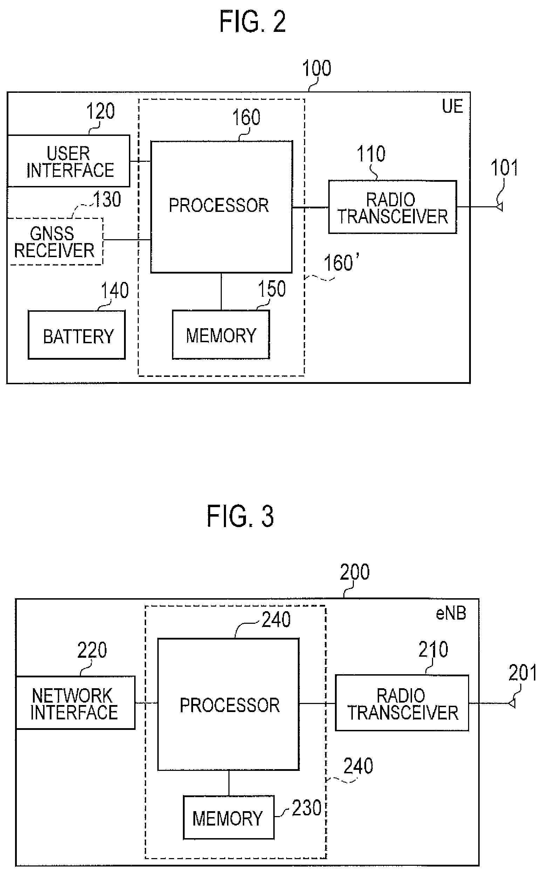

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, a battery 140, a memory 150, and a processor 160. The memory 150 and the processor 160 constitute a controller.

The UE 100 may not have the GNSS receiver 130. It is noted that the memory 150 may be integrally formed with the processor 160, and this set (that is, a chipset) may be called a processor 160'.

The antenna 101 and the radio transceiver 110 are used to transmit and receive a radio signal. The antenna 101 includes a plurality of antenna elements. The radio transceiver 110 converts a baseband signal output from the processor 160 into the radio signal, and transmits the radio signal from the antenna 101. Furthermore, the radio transceiver 110 converts the radio signal received by the antenna 101 into the baseband signal, and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160.

The GNSS receiver 130 receives a GNSS signal in order to obtain location information indicating a geographical location of the UE 100, and outputs the received signal to the processor 160.

The battery 140 accumulates a power to be supplied to each block of the UE 100.

The memory 150 stores a program to be executed by the processor 160 and information to be used for a process by the processor 160.

The processor 160 includes a baseband processor that performs modulation and demodulation, encoding and decoding and the like of the baseband signal, and a CPU (Central Processing Unit) that performs various processes by executing the program stored in the memory 150. The processor 160 may further include a codec that performs encoding and decoding of sound and video signals. The processor 160 implements various processes and various communication protocols described later.

Fig. 3 is a block diagram of the eNB 200. As illustrated in Fig. 3, the eNB 200 (including a MeNB 200A, a PeNB 200B, and a PeNB 200B as described later) includes an antenna 201, a radio transceiver 210, a network interface 220, a memory 230, and a processor 240. The memory 230 and the processor 240 constitute a controller. It is noted that the memory 230 may be integrally formed with the processor 240, and this set (that is, a chipset) may be called a processor 240'.

The antenna 201 and the radio transceiver 210 are used to transmit and receive a radio signal. The antenna 201 includes a plurality of antenna elements. The radio transceiver 210 converts the baseband signal output from the processor 240 into the radio signal, and transmits the radio signal from the antenna 201. Furthermore, the radio transceiver 210 converts the radio signal received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240.

The processor 240 includes the baseband processor that performs modulation and demodulation, and encoding and decoding of the baseband signal and a CPU that performs various processes by executing the program stored in the memory 230. The processor 240 implements various processes and various communication protocols described later.

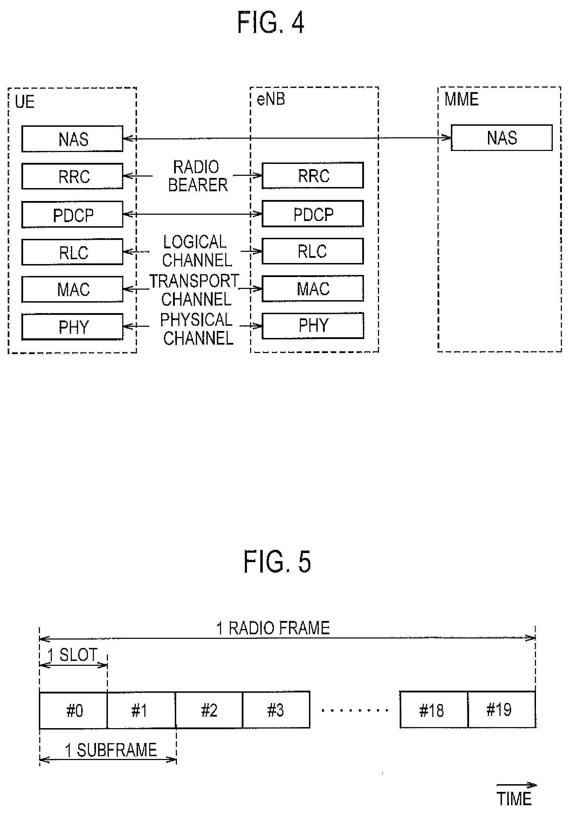

Fig. 4 is a protocol stack diagram of a radio interface in the LTE system.

As illustrated in Fig. 4, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. The PHY layer provides a transmission service to an upper layer by use of a physical channel. Between the PHY layer of the UE 100 and the PHY layer of the eNB 200, data is transmitted via the physical channel.

The MAC layer performs preferential control of data, and a retransmission process and the like by hybrid ARQ (an HARQ). Between the MAC layer of the UE 100 and the MAC layer of the eNB 200, data is transmitted via a transport channel. The MAC layer of the eNB 200 includes a MAC scheduler that determines an uplink and downlink transport format (a transport block size, a modulation and coding scheme and the like) and an assignment resource block.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When an RRC connection is established between the RRC of the UE 100 and the RRC of the eNB 200, the UE 100 is in a connection state, and when the RRC connection is not established, the UE 100 is in an idle state.

A NAS (Non-Access Stratum) layer positioned above the RRC layer performs session management or mobility management, for example.

Fig. 5 is a configuration diagram of a radio frame used in the LTE system. In the LTE system, OFDMA (Orthogonal Frequency Division Multiple Access) is used in a downlink, and SC-FDMA (Single Carrier Frequency Division Multiple Access) is used in an uplink.

As illustrated in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each symbol is provided at a head thereof with a guard interval called a cyclic prefix (CP). The resource block includes a plurality of subcarriers in the frequency direction. A radio resource unit configured by one subcarrier and one symbol is called a resource element (RE).

Among radio resources assigned to the UE 100, a frequency resource can be designated by a resource block and a time resource can be designated by a subframe (or slot).

In the downlink, an interval of several symbols at the head of each subframe is a control region mainly used as a physical downlink control channel (PDCCH). Furthermore, the other interval of each subframe is a region mainly used as a physical downlink shared channel (PDSCH). Furthermore, cell-specific reference signals (CRSs) are distributed and arranged in each subframe.

In the uplink, both end portions in the frequency direction of each subframe are control regions mainly used as a physical uplink control channel (PUCCH). Furthermore, the center portion, in the frequency direction, of each subframe is a region mainly used as a physical uplink shared channel (PUSCH). Furthermore, demodulation reference signal (DMRS) and sounding reference signal are arranged in each subframe.

### (D2D communication)

Next, a description is given with comparing the D2D communication with the normal communication (the cellular communication) in the LTE system.

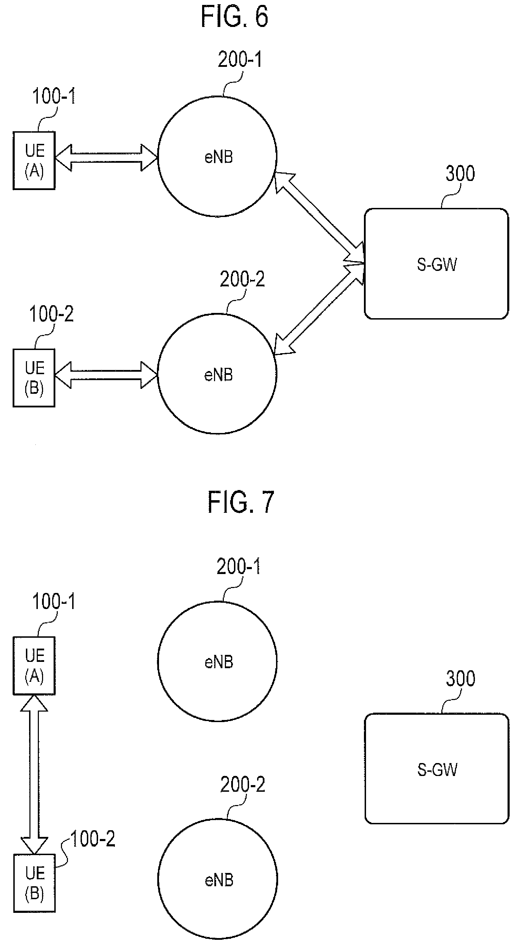

Fig. 6 is a diagram illustrating a data path in the cellular communication. In this case, Fig. 6 illustrates the case in which the cellular communication is performed between UE 100-1 that establishes a connection with eNB 200-1 and UE 100-2 that establishes a connection with eNB 200-2. It is noted that the data path indicates a transfer path of user data (a user plane).

As illustrated in Fig. 6 the data path of the cellular communication goes through a network. Specifically, the data path is set to pass through the eNB 200-1, the S-GW 300, and the eNB 200-2.

Fig. 7 is a diagram illustrating a data path in the D2D communication. In this case, Fig. 7 illustrates the case in which the D2D communication is performed between the UE 100-1 that establishes a connection with the eNB 200-1 and the UE 100-2 that establishes a connection with the eNB 200-2.

As illustrated in Fig. 7, the data path of the D2D communication does not go through a network. That is, direct radio communication is performed between the UEs. As described above, when the UE 100-2 exists in the vicinity of the UE 100-1, the D2D communication is performed between the UE 100-1 and the UE 100-2, thereby obtaining an effect that a traffic load of the network and a battery consumption amount of the UE 100 are reduced, for example.

It is noted that cases in which the D2D communication is started include (a) a case in which the D2D communication is started after a partner terminal is discovered by performing an operation for discovering a partner terminal, and (b) a case in which the D2D communication is started without performing an operation for discovering a partner terminal.

For example, in the above-described case (a), one UE 100 of the UE 100-1 and the UE 100-2 discovers the other UE 100 existing in the proximity of the one UE 100, so that the D2D communication is started.

In such a case, in order to discover a partner terminal (a proximal terminal), the UE 100 has a (Discover) function of discovering another UE 100 existing in the proximity of the UE 100, and/or a (Discoverable) function of being discovered by another UE 100.

Specifically, the UE 100-1 transmits a discovery signal (Discover signal / Discoverable signal) for discovering the partner terminal or for being discovered by the partner terminal. The UE 100-2 having received the discovery signal discovers the UE 100-1. The UE 100-2 transmits a response to a discovery signal so that the UE 100-1 having transmitted discovery signal discovers the UE 100-1 being the partner terminal.

It is noted that the UE 100 need not necessarily perform the D2D communication even upon discovering a partner terminal. For example, after mutually discovering each other, the UE 100-1 and the UE 100-2 may perform a negotiation, and determine whether or not to perform the D2D communication. When each of the UE 100-1 and the UE 100-2 agrees to perform the D2D communication, the D2D communication starts. Further, the UE 100-1 may report a vicinity UE 100 (that is, the UE 100-2) to an upper layer (such as an application) in a case where the UE 100-1 does not perform the D2D communication after discovering the partner terminal. For example, the application can perfume a process based on the report (such as a process in which a location of the UE 100-2 is plotted on map information).

Further, the UE 100 can report discovering the partner terminal to the eNB 200 and receive instruction for whether communication with the partner terminal is performed by the cellular communication or the D2D communication, from the eNB 200.

On the other hand, in the above-described case (b), for example, the UE 100-1 starts transmitting (announcing by broadcast or the like) a signal for the D2D communication without specifying the partner terminal. Thus, the UE 100 is capable of starting the D2D communication regardless of the existence of the discovery of a partner terminal. It is noted the UE 100-2 performing a waiting operation for receiving a signal for the D2D communication performs synchronization and/or demodulation on the basis of the signal from the UE 100-1.

### (Fixed UE list, fixed D2DUE list)

Next, a fixed UE list and a fixed D2DUE list will be described.

UEs 100 capable of performing the D2D communication include not only the general mobile UEs 100, but also fixed-type UEs 100 whose movement is restricted (hereinafter, appropriately called the fixed UEs). An example of a fixed-type UE 100, whose movement is restricted, is a UE 100 whose location is fixed, or a UE 100 having an MTC function. It is noted that a fixed UE corresponds to a fixed node.

Hereinafter, of the fixed UEs, the UEs 100 that transmit (distribute) predetermined information (for example, advertisements) using a D2D proximity service (D2D communication) will be appropriately called fixed D2DUEs.

In the present embodiment, the eNB 200 has a fixed UE list concerning information of fixed UEs that exist (is present) in a cell of the eNB 200. Not only the identifiers of fixed UEs, but also the location information of fixed UEs may be registered in the fixed UE list. Further, the fixed UE list may be a list that is broadcast or unicast within a cell of the eNB 200.

Moreover, the eNB 200 may have a fixed D2D list concerning information of fixed UEs having a D2D communication function. By providing an item for existence of the D2D communication function in the fixed UE list, the eNB 200 may use a single list which serves as a fixed UE list and a fixed D2D list.

In order to determine whether or not a UE 100 that exists in a cell of the eNB 200 is a fixed UE, the eNB 200 is capable of using the methods described below.

Firstly, if capability information received from a UE 100 that exists in a cell of the eNB 200 includes information by which it is possible to determine whether or not the UE 100 is a fixed UE, the eNB 200 determines that the UE 100 that is a transmission source of the capability information is a fixed UE.

The information by which it is possible to determine whether or not a UE 100 is a fixed UE is, for example, a fixed flag indicating whether or not a UE 100 is a fixed UE. If the fixed flag is ON, the eNB 200 determines that the UE 100, which is the transmission source of the capability information, is a fixed UE, and if the fixed flag is OFF, the eNB 200 determines that the UE 100, which is the transmission source of the capability information, is not a fixed UE.

Alternatively, if the capability information includes a flag indicating the type of the UE, and the flag indicates that fixed-type advertisement distribution is performed, the eNB 200 determines that the UE 100, which is the transmission source of the capability information, is a fixed UE.

It is noted that if together with the fixed flag, the capability information includes a D2D flag indicating whether or not D2D communication is available, the eNB 200 is capable of determining whether or not the UE 100, which is the transmission source of the capability information, is a fixed D2DUE.

Secondly, if the eNB 200 is an OFF target eNB in which a cell of the eNB 200 is to be set to OFF in order to reduce power consumption, the eNB 200 determines that a UE 100 that continues to exist in the cell of the eNB 200 until the cell of the eNB 200 is set to OFF, and in which the number of handover to the cell of the eNB 200 exceeds a threshold value when the OFF state of the cell of the eNB 200 ends, is a fixed UE.

Specifically, when the eNB 200 performs a handover procedure following setting of a cell of the eNB 200 to OFF, the eNB 200 acquires a C-RNTI of the handover destination allocated to the UE 100 performing handover from the eNB 200-1 of the handover destination. For example, the eNB 200-1 informs by including a reserved value of a Temporary C-RNTI in a handover request acknowledgment (HO Request Ack). Thereafter, the eNB 200-1 notifies the handover-source eNB 200 of the C-RNTI corresponding to the Temporary C-RNTI.

Thereafter, upon the end of the OFF state of the cell of the eNB 200, the eNB 200 acquires, from the handover-source eNB 200-1, the handover-source C-RNTI of the UE 100 performing handover to the cell of the eNB 200. For example, the eNB 200-1 notifies a handover request (HO Request) by including the value of the C-RNTI. When the C-RNTI acquired from the handover-destination eNB 200-1 is same as the C-RNTI acquired from the handover-source eNB 200-1, the eNB 200 increases by one the number of handover of the UE 100 to which the C-RNTI is allocated.

On the other hand, the eNB 200 determines whether or not the UE 100 continues to exist in the cell of the eNB 200 until the cell of the eNB 200 is set to OFF. If the UE 100 continues to exist in the cell of the eNB 200, and the number of handover by the UE 100 to the cell of the eNB 200 exceeds a threshold value when the OFF state of the cell of the eNB 200 ends, the eNB 200 determines that the UE 100 is a fixed UE.

Alternatively, when the eNB 200 performs the handover procedure following setting of the cell of the eNB 200 to OFF, the eNB 200 maintains a MME UE S1AP ID being a UE identifier in a handover request message of the UE 100 performing the handover. Thereafter, when the OFF state of the cell of the eNB 200 ends, the eNB 200 checks the MME UE S1AP ID of the UE 100 performing handover to the cell of the eNB 200. The eNB 200 increases by one the number of handover of a UE 100 associated with the same MME UE S1AP ID before and after the cell of the eNB 200 is set to OFF.

On the other hand, the eNB 200 determines whether or not the UE 100 continues to exist in the cell of the eNB 200 until the cell of the eNB 200 is set to OFF. If the UE 100 continues to exist in the cell of the eNB 200, and the number of handover by the UE 100 to the cell of the eNB 200 exceeds a threshold value when the OFF state of the cell of the eNB 200 ends, the eNB 200 determines that the UE 100 is a fixed UE.

Thirdly, if the eNB 200 is an extension target eNB that performs cell extension for area compensation during the time a cell of a neighboring eNB is OFF, the eNB 200 determines that a UE 100 that continues to exist in a cell of the eNB 200 during the time the cell of the eNB 200 is extending, and in which the number of handover exceeds a threshold value when the cell of the eNB 200 is extended, is a fixed UE. The specific operation is similar as the above-described second method.

The eNB 200 registers a UE 100 determined to be a fixed UE in the fixed UE list on the basis of the above-described determination result.

### (Deletion from fixed UE list)

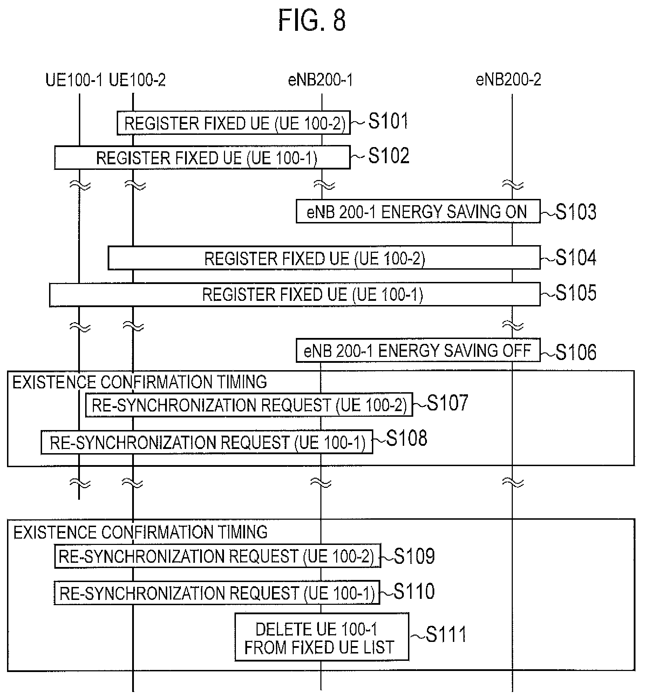

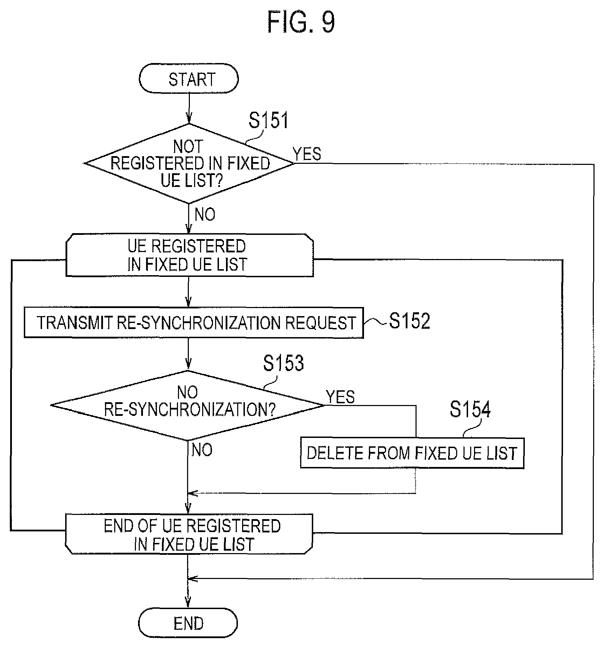

Next, the deletion from the fixed UE list will be described by using Fig. 8 and Fig. 9. Fig. 8 is a sequence diagram for describing an operation of deletion from the fixed UE list according to the present embodiment. Fig. 9 is a flowchart for describing an operation of deletion from the fixed UE list according to the present embodiment. It is noted that instead of a fixed UE list, there may be a fixed D2DUE list.

Here, the description will be continued by assuming that the UE 100-1 and the UE 100-2 exist in a cell 250-1 of the eNB 200-1, and as a result of setting of the cell 250-1 of the eNB 200-1 to OFF, and extension of a cell 250-2 of the eNB 200-2, the UE 100-1 and the UE 100-2 exist in the cell 250-2.

As shown in Fig. 8, in step S101, as a result of the determination described above, the eNB 200-1 determines the UE 100-2 as a fixed UE, and registers the UE 100-2 in the fixed UE list.

In step S102, the eNB 200-1 determines the UE 100-1 as a fixed UE, and registers the UE 100-1 in the fixed UE list.

In step S103, the eNB 200-1 sets energy saving to ON. That is, the eNB 200-1 sets the cell 250-1 to OFF. On the other hand, the eNB 200-2 extends the cell 250-2. As a result, the UE 100-1 and the UE 100-2 exist in the cell 250-2.

In step S104, the eNB 200-2 determines the UE 100-2 as a fixed UE, and registers the UE 100-2 in the fixed UE list.

In step S105, the eNB 200-2 determines the UE 100-1 as a fixed UE, and registers the UE 100-1 in the fixed UE list.

In step S106, the eNB 200-1 sets energy saving to OFF. That is, the eNB 200-1 sets the cell 250-1 to an ON state. On the other hand, the eNB 200-2 ends the extension of the cell 250-2. As a result, the UE 100-1 and the UE 100-2 exist in the cell 250-1.

In step S107, after setting energy saving to OFF, the eNB 200-1 sends a re-synchronization request to the UE 100-2. The UE 100-2 performs re-synchronization. As a result, the eNB 200-1 confirms that the UE 100-2 exists in the cell 250-1.

In step S108, the eNB 200-1 similarly sends a re-synchronization request to the UE 100-1, and confirms if the UE 100-1 exists in the cell 250-1.

Thereafter, it is assumed that the UE 100-1 moves from the cell 250-1.

In step S109, the eNB 200-1 sends a re-synchronization request to the UE 100-2 after predetermined time has passed from the re-synchronization request of step S107. The eNB 200-1 confirms that the UE 100-2 exists in the cell 250-1.

In step S110, the eNB 200-1 sends a re-synchronization request to the UE 100-1 after predetermined time has passed from the re-synchronization request of step S108. Since re-synchronization is not performed from the UE 100-1, the eNB 200-1 determines that the UE 100-1 does not exist in the cell 250-1.

In step S111, the eNB 200-1 deletes the UE 100-1 from the fixed UE list.

Thereafter, the eNB 200-1 notifies the eNB 200-2 that the UE 100-1 has moved from the cell 250-1. The eNB 200-2 deletes the UE 100-1 from the fixed UE list.

Next, an operation of the eNB 200-1 will be described by using Fig. 9.

As shown in Fig. 9, in step S151, the eNB 200-1 determines whether or not the UE 100 is a fixed UE registered in the fixed UE list. If the UE 100 is not registered in the fixed UE list, the eNB 200-1 ends the processing. On the other hand, if the UE 100 is registered in the fixed UE list, the eNB 200-1 executes the processing of step S152.

In step S152, the eNB 200-1 transmits a re-synchronization request to the UE 100 registered in the fixed UE list.

In step S153, the eNB 200-1 determines whether or not re-synchronization is performed from the UE 100 registered in the fixed UE list. If re-synchronization is performed from the UE 100, the eNB 200-1 ends the processing for the UE 100 performing re-synchronization. On the other hand, if re-synchronization is not performed from the UE 100, the eNB 200-1 executes the processing of step S154.

In step S154, the eNB 200-1 deletes the UE 100 from the fixed UE list, and ends the processing for the UE 100.

The eNB 200-1 executes the concerned processing for all UEs 100 registered in the fixed UE list.

### (Operation according to first embodiment)

### (1) Operation environment

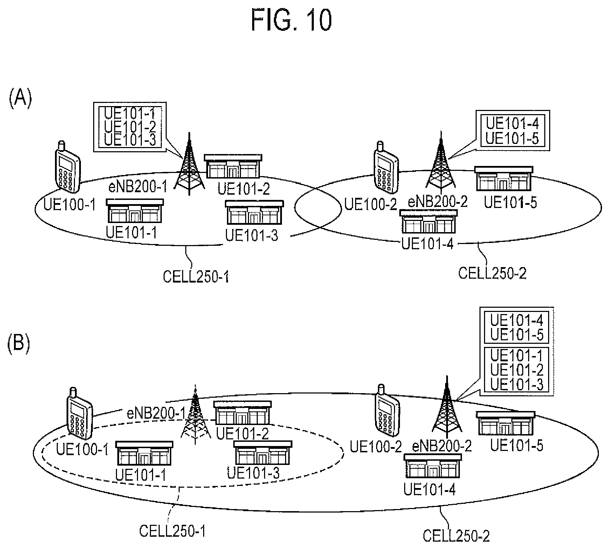

Next, an operation environment of the mobile communication system according to the present embodiment will be described by using Fig. 10. Fig. 10 is an explanatory diagram for describing the operation environment of the mobile communication system according to the first embodiment.

As shown in Fig. 10, the mobile communication system has UEs 100 (UE 100-1, UE 100-2), UEs 101 (UE 101-1 to UE 101-5), and eNBs 200 (eNB 200-1 and eNB 200-2).

The UE 100-1 exists in the cell 250-1 managed by the eNB 200-1, and the UE 100-2 exists in the cell 250-2 managed by the eNB 200-2. Further, the UE 101 is a fixed D2DUE that performs D2D communication for advertisement distribution. The UE 101-1 to UE 101-3 are installed in the cell 250-1, and the UE 101-4 and the UE 101-5 are installed in the cell 250-2. The eNB 200-1 is an OFF target eNB in which a cell of the eNB 200-1 is to be set to OFF for energy saving. On the other hand, the eNB 200-2 is an extension target eNB in which cell extension is to be performed for compensating the cell 250-1.

Here, before setting the cell 250-1 to OFF, the eNB 200-1 selects the extension target eNB for compensating the cell 250-1. The eNB 200-1 selects the extension target eNB from among the eNBs 200 controlled in the MME configured to control the eNB 200-1. Alternatively, the eNB 200-1 selects the extension target eNB from among the eNBs 200 belonging to the same tracking area as the eNB 200-1 (that is, the eNBs 200 having the same tracking area list). The description is continued by assuming that the eNB 200-1 selects the eNB 200-2 as the extension target eNB.

As shown in Fig. 10 (A), in the state before the eNB 200-1 sets the cell 250-1 to OFF, the eNB 200-1 maintains the fixed UE list in which the UE 101-1 to the UE 101-3 are registered, and the eNB 200-2 maintains the fixed UE list in which the UE 101-4 and the UE 101-5 are registered.

The eNB 200-1 uses the fixed UE list when managing the cell 250-1. Specifically, the eNB 200-1 broadcasts the fixed UE list in a cell of the eNB 200-1, and transmits the fixed UE list to the UE 100-1 by unicast. By using the received fixed UE list, for example, the UE 100-1 is capable of grasping the fixed UEs that exist in the cell 250-1.

It is noted that similar to the eNB 200-1, the eNB 200-2 also uses the fixed UE list when managing the cell 250-2.

Before the eNB 200-2 extends the cell 250-2, the eNB 200-1 transmits the fixed UE list to the eNB 200 via the X2 interface.

As shown in Fig. 10 (B), the eNB 200-1 sets the cell 250-1 to OFF, and the eNB 200-2 extends the cell 250-2.

The eNB 200-2 manages the cell 250-2, whose coverage has been extended, on the basis of the fixed UE list received from the eNB 200-1 in addition to the fixed UE list used when managing the cell 250-2. That is, the eNB 200-2 inherits the fixed UE list from the eNB 200-1 and manages the cell 250-2. Specifically, the eNB 200-2 broadcasts or unicasts the fixed UE list that has been updated on the basis of the fixed list received from the eNB 200-1 within the extended cell 250-2. As a result, the eNB 200-2 is also capable of providing a fixed UE list containing information concerning the UE 101-1 to the UE 101-3 that are not present in the fixed UE list maintained beforehand, to the UE 100-1 and the UE 100-2 in the cell 250-2.

### (2) Operation at the time of starting energy saving

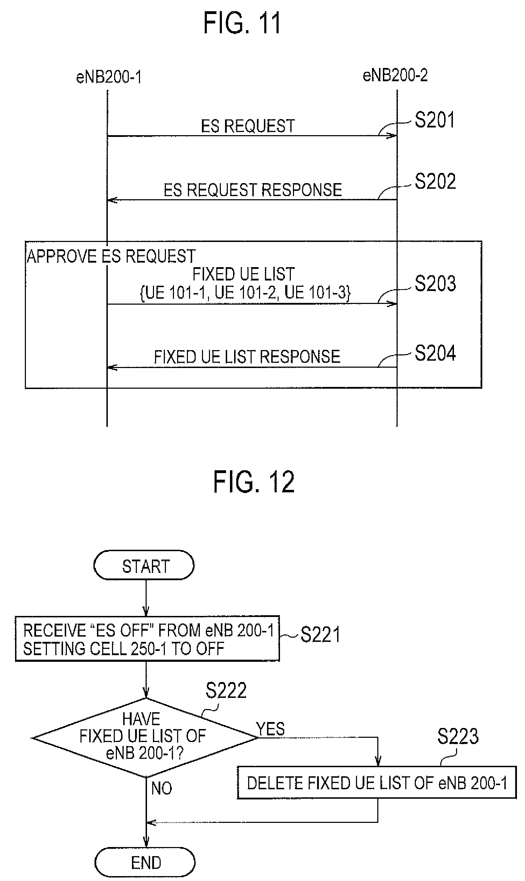

Next, an operation at the time of starting energy saving will be described by using Fig. 10 and Fig. 11. Fig. 11 is a sequence diagram for describing an operation at the time of starting energy saving according to the first embodiment.

As shown in Fig. 11, in step S201, the eNB 200-1 transmits to the eNB 200-2 an ES request to request performing of the cell extension. The eNB 200-2 receives the ES request.

In step S202, the eNB 200-2 transmits a response to the ES request, to the eNB 200-1. The eNB 200-1 receives the ES request response. When the eNB 200-2 transmits a response indicating that the ES request is approved, the processing of step S203 is executed. On the other hand, when the eNB 200-2 transmits a response indicating that the ES request is denied, the processing ends.

In step S203, the eNB 200-1 transmits the fixed UE list to the eNB 200-2. The eNB 200-2 receives the fixed UE list.

In step S204, the eNB 200-2 transmits, to the eNB 200-1, a fixed UE list response including the fact that the fixed UE list is received. The eNB 200-1 receives the fixed UE list response.

Thereafter, the eNB 200-1 sets the cell 250-1 to OFF, and the eNB 200-2 extends the cell 250-2, and starts the management of the cell 250-2 on the basis of the fixed list received from the eNB 200-1.

### (3) Operation at the time of ending energy saving

Next, an operation at the time of ending energy saving will be described by using Fig. 10 and Fig. 12. Fig. 12 is a flowchart for describing an operation at the time of ending energy saving according to the first embodiment. Specifically, Fig. 12 is a flowchart for describing an operation of the eNB 200-2 in which extension of the cell 250-2 is being performed in order to compensate the coverage of the cell 250-1.

As shown in Fig. 12, in step S221, the eNB 200-2 receives, from the eNB 200-1 in which the cell 250-1 has been set to OFF, information about energy saving OFF (ES OFF) indicating that OFF of the cell 250-1 is to be ended.

In step S222, the eNB 200-2 determines whether or not the eNB 200-2 has the fixed UE list of the eNB 200-1. If the eNB 200-2 has the fixed UE list of the eNB 200-1, the eNB 200-2 executes the processing of step S223. On the other hand, if the eNB 200-2 does not have the fixed UE list of the eNB 200-1, the eNB 200-2 ends the processing.

In step S223, the eNB 200-2 deletes the fixed UE list of the eNB 200-1. Since information that is not required for the management of the cell 250-2 that has not been extended is deleted, it is possible to reduce the load on the eNB 200-2.

It is noted that the eNB 200-2 may not delete the fixed UE list, but may return the fixed UE list to the eNB 200-1. For example, when the eNB 200-2 updates the fixed UE list of the eNB 200-1, the eNB 200-2 may return the fixed UE list to the eNB 200-1.

### (Modification)

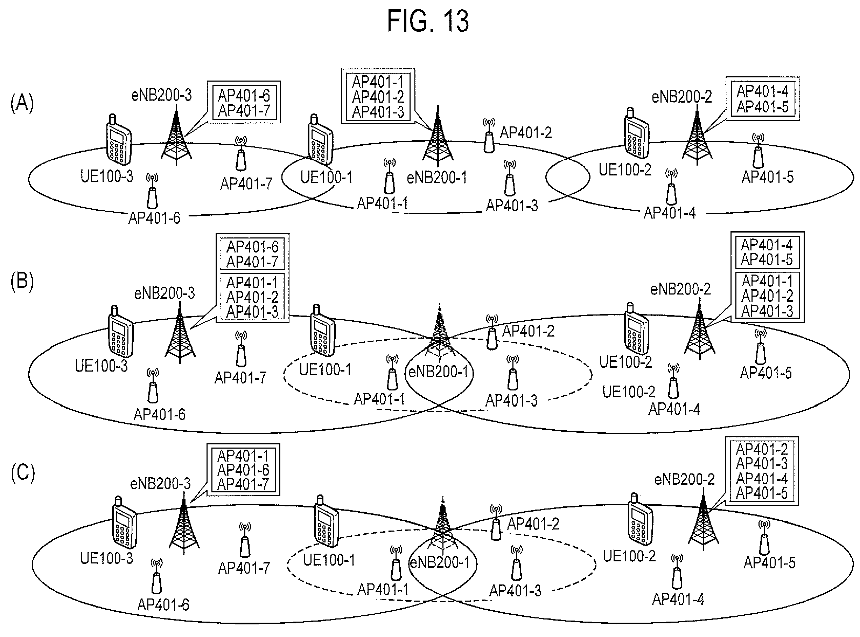

Next, a modification according to the present embodiment will be described by using Fig. 13. Fig. 13 is an explanatory diagram for describing an operation according to a modification of the present embodiment. It is noted that a description will be provided while focusing on a portion different from the above-described embodiment, and a description of a similar portion will be omitted, where necessary.

In the above-described embodiment, list information transmitted from an OFF target eNB to an extension target eNB is a fixed UE list. In the present modification, the list information is an AP list, which is a white list of wireless LAN access points (WLANAP or WiFiAP).

Fig. 13 (A) is a diagram showing a state before energy saving is performed. As shown in Fig. 13 (A), each of a plurality of eNBs 200 (eNB 200-1 to eNB 200-3) has an AP list, which is a white list of APs 401 located in a cell of the respective eNB 200.

The eNB 200-1 decides to set the cell of the eNB 200-1 to OFF, and transmits the AP list maintained in the eNB 200-1 to each of the eNB 200-2 and the eNB 200-3. Thereafter, the eNB 200-1 sets the cell of the eNB 200-1 to OFF, and each of the eNB 200-2 and the eNB 200-3 extends the cell of the respective eNB 200 (see Fig. 13 (B)).

Thereafter, each of the eNB 200-2 and the eNB 200-3 starts a management of the extended cell of the respective eNB 200.

Each of the eNB 200-2 and the eNB 200-3 (periodically) performs search of the AP in the cell of the respective eNB 200.

As a result of the search of the AP, the eNB 200-2 determines that an AP 401-1 is present in the cell of the eNB 200-2, and an AP 401-2 and an AP 401-3 are not present in the cell of the eNB 200-2. The eNB 200-2 updates the AP list by deleting the AP 401-2 and the AP 401-3 from the AP list on the basis of the determination result (see Fig. 13 (C)). Similarly, the eNB 200-3 updates the AP list by deleting the AP 401-1 from the AP list.

Each of the eNB 200-2 and the eNB 200-3 performs a management of the extended cell on the basis of the updated AP list. For example, each of the eNB 200-2 and the eNB 200-3 broadcasts or unicasts the updated AP list within the coverage of the cell of the respective eNB 200.

Each of the eNB 200-2 and the eNB 200-3 may maintain the updated AP list even after ending the cell extension. Each of the eNB 200-2 and the eNB 200-3 is capable of using the updated AP list that is maintained, when performing the next cell extension.

Further, each of the eNB 200-2 and the eNB 200-3 maintains the AP list that is maintained before extending the cell of the respective eNB 200, and after the cell extension ends, is capable of using the AP list that is maintained before extending the cell of the respective eNB 200.

Thus, each of the eNB 200-2 and the eNB 200-3 is capable of switching the AP list depending on the status of extension of the cell of the respective eNB 200.

### (Summary of first embodiment)

In the present embodiment, the eNB 200-1 transmits the fixed UE list to the eNB 200-2 before the cell extension is performed. The eNB 200-2 manages the cell 250-2, whose coverage has been extended, on the basis of the fixed UE list. As a result, the eNB 200-2 is capable of grasping the status of the fixed UEs within the range for which area compensation has been performed from the fixed UE list, and therefore, there is no need to perform an operation for grasping the fixed UEs, and it is possible to restrain the decline in network efficiency.

In the present embodiment, the fixed UE list is a list that the eNB 200-1 broadcasts or unicasts within the coverage of the cell 250-1. The eNB 200-2 is capable of broadcasting or unicasting the fixed UE list within the coverage of the cell 250-2. As a result, since the eNB 250-1 is capable of broadcasting or unicasting the fixed UE list of the eNB 200-1 within the coverage of the cell 250-2 after performing cell extension, it is possible to restrain the decline in network efficiency.

In the present embodiment, after ending cell extension, the eNB 200-2 either deletes the fixed UE list, or returns the fixed UE list to the eNB 200-1. As a result, since information that is not required for the management of the cell 250-2, which is not extended, is deleted, the eNB 200-2 is capable of reducing the load on the eNB 200-2.

In the present embodiment, the eNB 200-2 updates the fixed UE list. After ending the management of the extended cell, the eNB 200-2 maintains the updated fixed UE list for the next cell extension. As a result, it is possible to further restrain the decline in network efficiency when the eNB 200-2 manages the extended cell by using the updated fixed UE list.

In the present embodiment, the fixed UE list that the eNB 200-2 receives from the eNB 200-1 is information indicating a list concerning fixed nodes whose location are fixed and which exists in the cell 250-1. Further, in the present embodiment, a fixed node is a wireless LAN access point, or is a fixed-type UE 100 configured to transmit (distribute) information by using the D2D proximity service (D2D communication). Since there is a high probability that the fixed node whose location is fixed exists in an extended cell when the eNB 200-2 performs cell extension, it is possible to further restrain the decline in network efficiency when the eNB 200-2 acquires list information concerning such a fixed node from the eNB 200-1.

In the present embodiment, the eNB 200-1 receives capability information including information by which it is possible to determine whether or not the UE 100 is a fixed UE, from the UE 100 that exists in the cell 250-1. The eNB 200-1 determines whether or not the UE 100 is a fixed UE on the basis of the capability information. The eNB 200-1 updates the fixed UE list on the basis of the determination result. Moreover, in the present embodiment, the eNB 200-1 determines that a UE 100 that continues to exist in the cell 250-1 until the cell 250-1 is set to OFF, and in which the number of handover to the cell 250-1 exceeds a threshold value when the OFF state of the cell 250-1 ends, is a fixed UE. The eNB 200-1 updates the fixed UE list on the basis of the determination result. Moreover, in the present embodiment, the eNB 200-2 determines that a UE 100 that continues to exist in the cell 250-1 during the time the cell 250-2 is extending, and in which the number of handover to the cell 250-2 exceeds a threshold value when the cell 250-2 is extended, is a fixed UE. The eNB 200-2 updates the fixed UE list on the basis of the determination result. As a result, since the fixed UE list is updated appropriately, it is possible to restrain the decline in network efficiency.

In the present embodiment, the eNB 200-1 selects the extension target eNB from among the eNBs 200 controlled in the MME configured to control the eNB 200-1. Alternatively, the eNB 200-1 selects the extension target eNB from among the eNBs 200 belonging to the same tracking area as the eNB 200-1. As a result, the eNB 200-1 is capable of restraining from selecting, as the extension target eNB, an inappropriate neighboring eNB 200 for which area compensation is not possible to be performed.

### [Second Embodiment]

Next, a second embodiment will be described. A description will be provided while focusing on a portion different from the above-described first embodiment, and a description of a similar portion will be omitted, where necessary.

In the above-described embodiment, a case in which the OFF target eNB transmits the list information to the extension target eNB is described. In the present embodiment, a case in which the OFF target eNB transmits information of a fixed D2DUE to the extension target eNB, and before the cell extension is performed, the extension target eNB reserves beforehand, for the fixed D2DUE, a resources to be used in the extended cell after the cell extension, will be described.

### (1) Operation of eNB 200

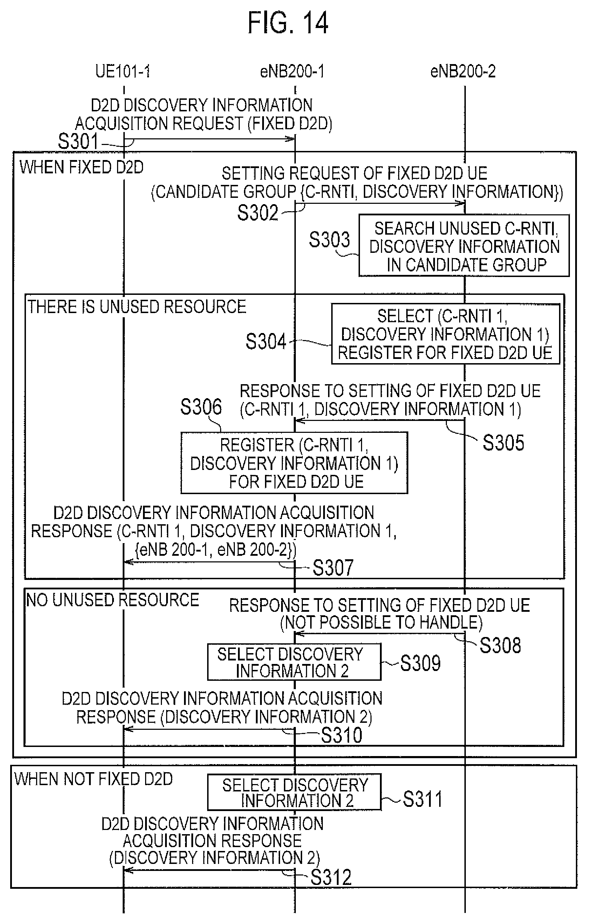

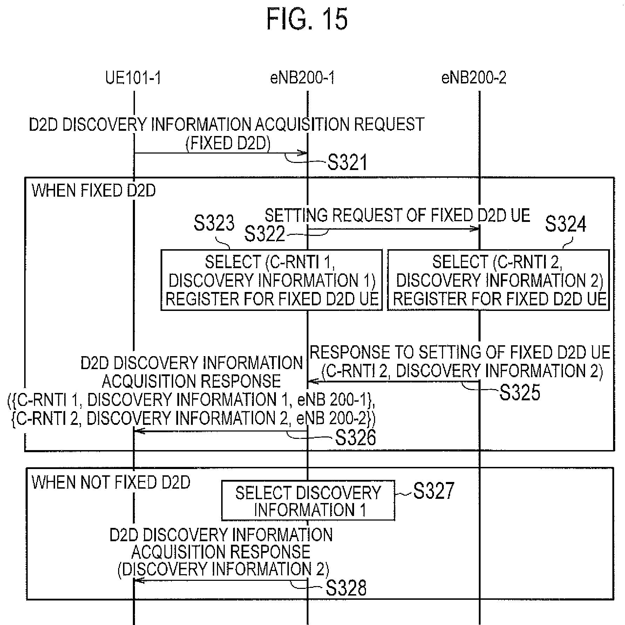

First of all, the description will be mainly focused on an operation of the eNB 200 by using Fig. 14 and Fig. 15. Fig. 14 is a sequence (part 1) for describing an operation of the eNB 200 according to the second embodiment. Fig. 15 is a sequence (part 2) for describing an operation of the eNB 200 according to the second embodiment.

In Fig. 14, the eNB 200-1 is an OFF target eNB, and the eNB 200-2 is an extension target eNB. Here, the description will be continued by assuming that the UE 101-1, which is a fixed D2DUE, exists in a cell managed by the eNB 200-1.

As shown in Fig. 14, in step S301, the UE 101-1 requests the eNB 200-1 to acquire Discovery information used for the transmission of a discovery signal for the D2D communication. The Discovery information acquisition request transmitted by the UE101-1 includes information indicating whether or not the transmission-source UE 101-1 is a fixed D2DUE.

It is noted that the Discovery information includes an identifier allocated for the transmission of the discovery signal, or a time-frequency resource used for the transmission of the discovery signal, for example.

The eNB 200-1 determines whether or not the UE 101-1 is a fixed D2DUE on the basis of the information indicating whether or not the UE 101-1 is a fixed D2DUE. When the UE 101-1 is a fixed D2DUE, the eNB 200-1 executes the processing of step S302. On the other hand, when the UE 101-1 is not a fixed D2DUE, the eNB 200-1 executes the processing of step S311.

In step S302, the eNB 200-1 transmits a setting request of the fixed D2DUE to the eNB 200-2. The setting request of the fixed D2DUE includes information indicating a candidate group of resources that the eNB 200-1 is capable of performing allocation. Specifically, the information indicating a candidate group of resources includes a plurality of C-RNTIs and a plurality of Discovery information. It is noted that the setting request of the fixed D2DUE is a request for reserving, for the fixed D2DUE (UE 101-1), a resource used after the cell extension is performed, and includes information concerning the UE 101-1 that exists in a cell of the eNB 200-1.

In step S303, from among the candidate group of resources received from the eNB 200-1, the eNB 200-2 searches resources (that is, the C-RNTIs and Discovery information) that are not used in a cell of the eNB 200-2.

If there is an unused resource, the eNB 200-2 executes the processing of step S304. On the other hand, if there is no unused resource, the eNB 200-2 executes the processing of step S308.

In step S304, the eNB 200-2 selects an unused resource (C-RNTI 1, Discovery information 1). In addition, the eNB 200-2 registers the selected resource in the fixed D2DUE list for use in the UE 101-1, which is a fixed D2DUE. As a result, the eNB 200-2 stores that the selected resource is used in the UE 101-1.

In step S305, the eNB 200-2 transmits a response to the setting request of the fixed D2DUE to the eNB 200-1. The response includes the resource selected by the eNB 200-2 (C-RNTI 1, Discovery information 1).

In step S306, the eNB 200-1 registers in the fixed D2DUE list the resource included in the response (C-RNTI 1 and Discovery information 1) for use in the UE 101-1.

In step S307, the eNB 200-1 transmits a response to the D2D Discovery information acquisition request to the UE 101-1. The response includes the resource (C-RNTI 1, Discovery information 1) and information indicating the eNB 200 capable of using the resource (identifiers of the eNB 200-1 and the eNB 200-2).

As a result, even if switching of the cell is performed repeatedly based on energy saving, the UE 101-1 is capable of performing the D2D communication by using common C-RNTI and Discovery information 1, without receiving the allocation of resources from the eNB 200-1 and the eNB 200-2.

On the other hand, if there is no unused resource in the candidate group in the eNB 200-2, then in step S308, the eNB 200-2 transmits a response to the setting request of the fixed D2DUE to the eNB 200-1. The response includes information indicating that the request is not possible to be handled.

In step S309, the eNB 200-1 selects Discovery information 2 from among the unused resources.

In step S310, the eNB 200-1 transmits a response to the D2D Discovery information acquisition request to the UE 101-1. The response includes a resource (Discovery information 2).

On the other hand, if the UE 101-1 is not a fixed D2DUE, then in step S311, the eNB 200-1 selects Discovery information 2 from among the unused resources.

Step S312 corresponds to step S310.

Next, another case in which the extension target eNB reserves a resource beforehand will be described by using Fig. 15.

As shown in Fig. 15, step S321 corresponds to step S301. If the UE 101-1 is a fixed UE D2DUE, the eNB 200-1 executes the processing of step S322. On the other hand, if the UE 101-1 is not the fixed D2DUE, the eNB 200-1 executes the processing of step S328.

In step S322, the eNB 200-1 transmits a setting request of the fixed D2DUE to the eNB 200-2.

In step S323, the eNB 200-1 selects (C-RNTI 1, Discovery information 1) from among the resources that the eNB 200-1 does not use. In addition, the eNB 200-1 registers the selected resource in the fixed D2DUE list for use in the UE 101-1, which is a fixed D2DUE.

In step S324, the eNB 200-2 selects (C-RNTI 2, Discovery information 2) from among the resources that the eNB 200-2 does not use. In addition, the eNB 200-2 registers the selected resource in the fixed D2DUE list for use in the UE 101-1, which is a fixed D2DUE.

In step S325, the eNB 200-2 transmits a response to the setting request of the fixed D2DUE to the eNB 200-1. The response includes the resource selected by the eNB 200-2 (C-RNTI 2, Discovery information 2).

In step S326, the eNB 200-1 transmits a response to the D2D Discovery information acquisition request to the UE 101-1. The response includes (C-RNTI 1, Discovery information 1, eNB 200-1) indicating the resource of the eNB 200-1 and (C-RNTI 2, Discovery information 2, eNB 200-2) indicating the resource of the eNB 200-2.

As a result, by switching a resource to be used according to the switching of the cell based on the energy saving, the UE 101-1 is capable of performing the D2D communication without receiving the allocation of resources from the eNB 200-1 and the eNB 200-2.

Steps S327 and S328 correspond to steps S311 and S312.

### (2) Operation of fixed D2DUE 101

### (2.1) Overview of operation of fixed D2DUE 101

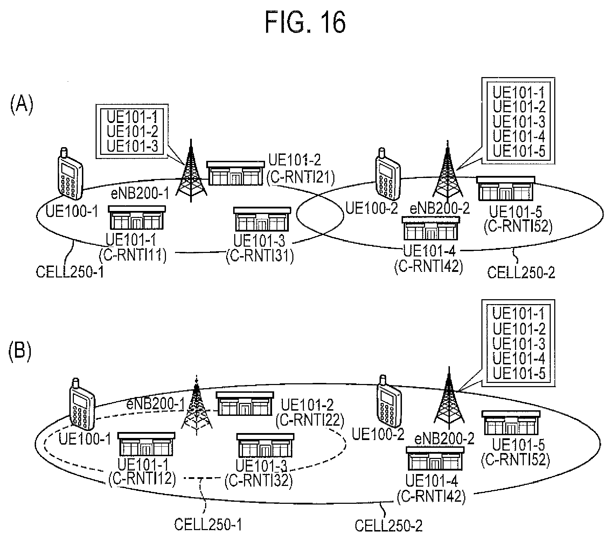

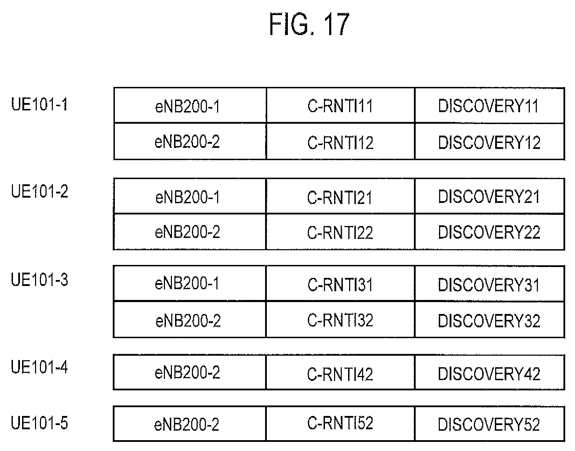

Next, the description will be mainly focused on an overview of an operation of a fixed D2DUE 101 by using Fig. 16 and Fig. 17. Fig. 16 and Fig. 17 are explanatory diagrams for describing an operation of the UE 101 according to the second embodiment.

As shown in Fig. 16 (A), the UE 101-1 to the UE 101-3, which are the fixed D2DUEs, exist in the cell 250-1 managed by the eNB 200-1. Further, the UE 101-4 and the UE 101-5, which are the fixed D2DUEs, exist in the cell 250-2 managed by the eNB 200-2.

Even if not in an extended state, the UE 101-1 to the UE 101-3 that exist in the coverage of an extended cell of the eNB 200-2 are registered in the fixed D2DUE list maintained in the eNB 200-2. The eNB 200-2 allocates resources (C-RNTI, Discovery information) not only to the UE 101-4 and the UE 101-5 that exist in the coverage of the cell 250-2 before the cell extension is performed, but also to the UE 101-1 to the UE 101-3 that exist in the coverage of the cell 250-2 after the cell extension is performed. Therefore, as shown in Fig. 17, the UE 101-1 to the UE 101-3 store an identifier of the eNB 200-1 and a resource corresponding to the eNB 200-1, as well as an identifier of the eNB 200-2 and a resource corresponding to the eNB 200-2.

Each of the UE 101-1 to the UE 101-3 performs transmission of the discovery signal by switching a resource to be used according to ON or OFF of the cell 250-1, specifically, according to a reception of a signal from the eNB 200-1 or the eNB 200-2 for setting the cell to OFF or ON. Specifically, the UE 101-1 to the UE 101-3 perform transmission of the discovery signal by using a resource corresponding to the detected identifier of the eNB 200.

### (2.2) Operation sequence of fixed D2DUE 101

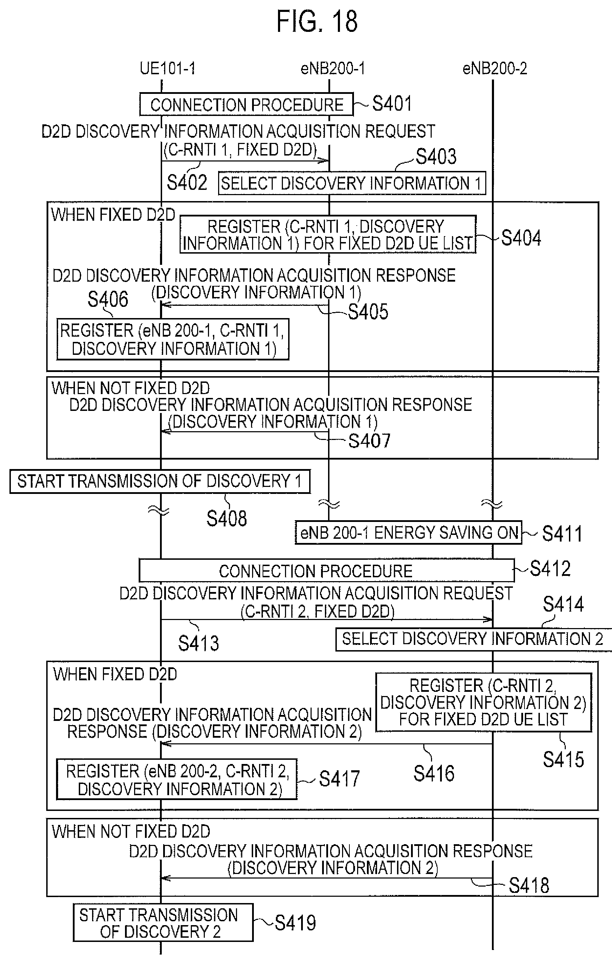

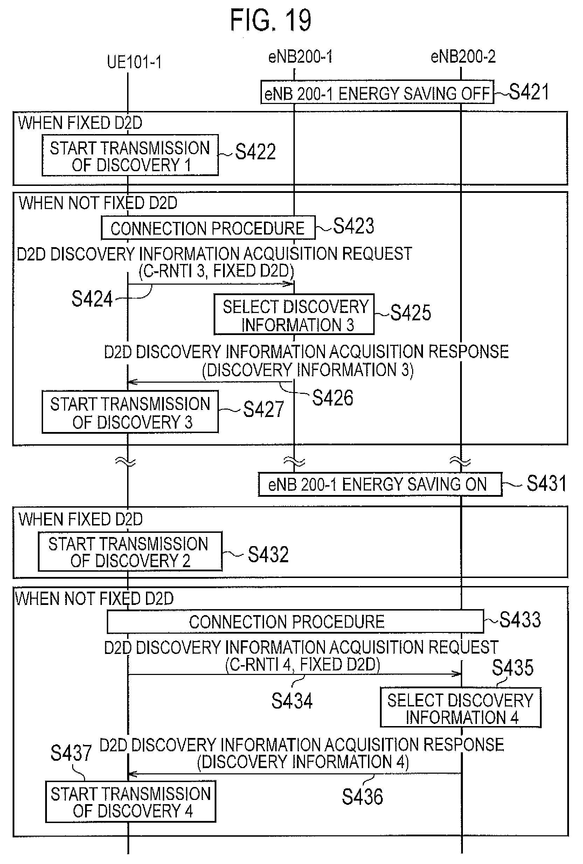

Next, an operation sequence of the fixed D2DUE 101 will be described by using Fig. 18 and Fig. 19. Fig. 18 and Fig. 19 are sequence diagrams for describing an operation of the UE 101 according to the second embodiment.

In step S401, the UE 101-1 performs a procedure (random access procedure) for establishing a connection to the eNB 200-1. Thereafter, the UE 101-1 establishes a connection to (a cell of) the eNB 200-1. It is noted that the eNB 200-1 allocates the C-RNTI 1 to the UE 101-1.

In step S402, the UE 101-1 transmits a D2D Discovery information acquisition request to the eNB 200-1. The D2D Discovery information acquisition request includes information indicating whether or not a resource is the CRNTI 1 and a UE is a fixed D2DUE.

In step S403, the eNB 200-1 selects Discovery information 1 from among the unused resources.

If the UE 101-1 is a fixed D2DUE, then in step S404, the eNB 200-1 registers the C-RNTI 1 and Discovery information 1 in the fixed D2DUE list for use in the UE 101-1.

In step S405, the eNB 200-1 transmits a response to the D2D Discovery information acquisition request to the UE 101-1. The response includes Discovery information 1.

In step S406, the UE 101-1 associates the identifier of the eNB 200-1, the C-RNTI 1, and Discovery information 1 to register in a predetermined list.

On the other hand, if the UE 101-1 is not a fixed D2DUE, then in step S407, the eNB 200-1 transmits, to the UE 101-1, a response to the D2D Discovery information acquisition request. The response includes Discovery information 1.

In step S408, the UE 101-1 starts transmission of Discovery 1, which is a discovery signal, by using Discovery information 1.

Thereafter, in step S411, the eNB 200-1 sets energy saving to ON. As a result, the eNB 200-1 sets the cell of the eNB 200-1 to OFF, and the eNB 200-2 extends the cell of the eNB 200-2 and performs area compensation of the cell of the eNB 200-1. Further, the UE 101-1 starts existence in the cell of the eNB 200-2.

In step S412, similar to step S401, the UE 101-1 establishes a connection to (a cell of) the eNB 200-2. It is noted that the eNB 200-2 allocates the C-RNTI 2 to the UE 101-1.

In step S413, similar to step S402, the UE 101-1 transmits a D2D Discovery information acquisition request to the eNB 200-2. The D2D Discovery information acquisition request includes information indicating whether or not a resource is the C-RNTI 2 and a UE is a fixed D2DUE.

In step S414, the eNB 200-2 selects Discovery information 2 from among the unused resources.

If the UE 101-1 is a fixed D2DUE, then in step S415, the eNB 200-2 registers the C-RNTI 2 and Discovery information 2 in the fixed D2DUE list for use in the UE 101-1.

In step S416, the eNB 200-2 transmits a response to the D2D Discovery information acquisition request to the UE 101-1. The response includes Discovery information 2.

In step S417, the UE 101-1 associates the identifier of the eNB 200-2, the C-RNTI 2, and Discovery information 2 to register in a predetermined list.

On the other hand, if the UE 101-1 is not a fixed D2DUE, then in step S418, the eNB 200-2 transmits, to the UE 101-1, a response to the D2D Discovery information acquisition request. The response includes Discovery information 2.

In step S419, the UE 101-1 starts transmission of Discovery 2, which is a discovery signal, by using Discovery information 2.

In step S421 of Fig. 19, the eNB 200-1 sets energy saving to OFF. As a result, the eNB 200-1 sets the cell of the eNB 200-1 to ON, and the eNB 200-2 ends the extension of the cell of the eNB 200-2. Further, the UE 101-1 starts existence in the cell of the eNB 200-1.

If the UE 101-1 is a fixed UE, then in step S422, depending on the switching of the cell, the UE 101-1 performs an operation by using the CRNTI 1 without performing the procedure for establishing a connection to the eNB 200-1. Further, the eNB 200-1 starts transmission of Discovery 1, which is a discovery signal, by using Discovery information 1.

On the other hand, if the UE 101-1 is not a fixed UE, then in step S423, the UE 101-1 performs the procedure for establishing a connection to the eNB 200-1 to establish a connection to the eNB 200-1. It is noted that the eNB 200-1 allocates a C-RNTI 3 to the UE 101-1.

Excluding the facts that the C-RNTI 3 is used instead of the C-RNTI 1, Discovery information 3 is used instead of Discovery information 1, and transmission of Discovery 3 is performed instead of the transmission of Discovery 1, steps S424 to S427 correspond to steps S402, S403, S405, and S408.

Step S431 corresponds to step S411.

Thereafter, if the UE 101-1 is a fixed D2DUE, then in step S432, depending on the switching of the cell, the UE 101-1 that exists in the cell of the eNB 200-2 performs an operation by using the C-RNTI 2 without performing the procedure for establishing a connection to the eNB 200-1. Further, the eNB 200-1 starts transmission of Discovery 2, which is a discovery signal, by using Discovery information 2.

On the other hand, if the UE 101-1 is not a fixed D2DUE, then in step S433, the UE 101-1 performs the procedure for establishing a connection to the eNB 200-2 to establish a connection to the eNB 200-2. It is noted that the eNB 200-1 allocates a C-RNTI 4 to the UE 101-1.

Excluding the facts that the C-RNTI 4 is used instead of the C-RNTI 2, Discovery information 4 is used instead of Discovery information 2, and transmission of Discovery 4 is performed instead of the transmission of Discovery 2, steps S434 to S437 correspond to steps S413, S414, S416, and S419.

### (Summary of second embodiment)

In the present embodiment, the eNB 200-1 transmits a setting request of a fixed D2DUE, which is information concerning the UE 101-1 that exists in the cell of the eNB 200-1, before the cell extension is performed. On the basis of the setting request of the fixed D2DUE, the eNB 200-2 reserves, for the UE 101-1, a resource to be used after the cell extension is performed. As a result, when the cell extension is performed, since the resource has been reserved beforehand for the UE 101-1, the UE 101-1 is capable of using the resource earlier as compared to when the resource is reserved after the cell extension is performed, and thus, when the energy saving technology is introduced, it is possible to restrain the decline in the network efficiency.

In the present embodiment, the UE 101-1 receives a resource used in the cell of the eNB 200-2 before the cell of the eNB 200-1 is set to OFF. The UE 101-1 performs an operation by using the resource after the cell of the eNB 200-2 is extended, and during the time the UE 101-1 exists in the cell of the eNB 200-2. As a result, after the cell of the eNB 200-2 is extended, the UE 101-1 is capable of immediately performing an operation by using the resource.

In the present embodiment, the resource is the C-RNTI, which is a temporary identifier used for identifying the UE 101-1 within the coverage of the cell of the eNB 200-2. If the UE 101-1 exists in the cell of the eNB 200-2 after the cell of the eNB 200-2 is extended, the UE 101-1 is capable of skipping the random access procedure for establishing a connection to the cell of the eNB 200-2 and performing an operation by using the CRNTI. As a result, the UE 100-1 does not need to skip the random access procedure every time energy saving is performed.

In the present embodiment, the resource allocated to the eNB 200-2 is Discovery information used in the process (transmission of the discovery signal) of discovering a partner terminal in the D2D communication. If the UE 101-1 exists in the cell of the eNB 200-2 after the cell of the eNB 200-2 is extended, the UE 101-1 is capable of performing the discovery process on the basis of the Discovery information, without establishing a connection to the (cell of the) eNB 200-2. As a result, the UE 100-1 does not need to establish a connection to the eNB 200-2 every time energy saving is performed.

In the present embodiment, the UE 101-1 associates and stores the resource allocated from the eNB 200-1 together with the resource allocated from the eNB 200-2 before the cell of the eNB 200-1 is set to OFF. If the UE 101-1 again exists in the cell of the eNB 200-1 after the extension of the cell of the eNB 200-2 ends, the UE 101-1 performs an operation by using the resource allocated from the eNB 200-1. As a result, after the UE 101-1 exists in the cell of the eNB 200-1, the UE 101-1 is capable of immediately performing an operation by using the resource.

In the present embodiment, the resource allocated from the eNB 200-2 is a resource common to the resource allocated from the eNB 200-1. As a result, even when the cell is switched due to energy saving, the UE 101-1 is capable of performing an operation without switching the resource.

### [Other Embodiments]

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

For example, in the above-described embodiment, instead of the fixed UE list, the eNB 200-1 may transmit the fixed D2DUE list as the list information to the eNB 200-2.

Further, the eNB 200-1 may transmit, to the eNB 200-2, not only the fixed UE list, the fixed UE list, and the AP list, but also other lists.

For example, if the eNB 200-1 maintains at least one of the below-mentioned lists specified in the "3GPP technical report "TR 36.300"", the eNB 200-1 may transmit at least one of the maintained lists to the eNB 200-2.

- Tracking Area List
- List of CSG IDs
- List of donor eNB (list of DeNB cells)
- List of forbidden tracking areas for roaming
- Black list of neighboring cells
- List of the best cells
- List of donor eNB cell (DeNB cell list)
- List of carrier frequencies
- List of InterRAT (list of RATs)
- List of frequencies
- Neighbor cell list
- List of HRPD Secondary Pre-registration Zone IDs
- List of Equivalent PLMNs - CSG whitelist
- PCI list for hybrid cells
- MCCH session list
- List of TMGI's
- E-RAB Setup list
- Whole list of Tracking Area(s) (Whole list of TA(s))
- List of GUMMEIs
- List of distribution area for emergency information (Warning Area list)
- Inter Frequency Search list
- List of PCI values
- List of cells whose radio quality exceeds the threshold
- List of dormant cells
- List of E-UTRA carriers

Further, in the above-described second embodiment, resources are allocated to a fixed D2DUE; however, the present invention is not limited thereto. Resources may be allocated to a fixed UE, or resources may be allocated to a general UE 100.

Further, in "(1) Operation of eNB 200" in the above-described second embodiment, the eNB 200-1 may transmit, to the eNB 200-2, a setting request of a fixed D2DUE that includes resources (for example, the fixed D2DUE ID, the C-RNTI 1, and the Discovery information 1) selected from among unused resources in the eNB 200-1.

The eNB 200-2 may transmit information indicating approval as a response to the setting request of the fixed D2DUE when the eNB 200-2 allocates a resource same as a received resource. In this case, the eNB 200-1 is capable of transmitting, to the UE 101, information indicating that a resource is the common resource in the eNB 200-1 and the eNB 200-2 (the C-RNTI 1, Discovery information 1, the eNB 200-1, the eNB 200-2).

On the other hand, when the eNB 200-2 allocates a resource different from a received resource, the eNB 200-2 transmits, as a response to the setting request of the fixed D2DUE, information indicating a resource (the C-RNTI 2 and Discovery information 2) selected from among unused resources, together with information indicating approval. In this case, the eNB 200-1 is capable of transmitting, to the UE 101, information indicating that a resource is a different resource in the eNB 200-1 and the eNB 200-2 (the C-RNTI 1, Discovery information 1, the eNB 200-1/the C-RNTI 2, Discovery information 2, the eNB 200-2).

Further, in addition to the resource, the eNB 200-2 may also transmit, to the UE 101, via the eNB 200-1, information indicating timing advance (TA) for a fixed UE for which the TA is known.

Further, in the above-described second embodiment, in order to prevent overlapping of resources allocated to the UE 101 by each of the eNB 200-1 and the eNB 200-2, the range in which the eNB 200-1 is capable of performing allocation and the range in which the eNB 200-2 is capable of performing allocation may separate beforehand. The eNB 200-1 and the eNB 200-2 may share these ranges available for the allocation.

Further, at least one of the eNB 200-1 and the eNB 200-2 may receive information indicating at least one of these ranges available for the allocation, from an upper network. As a result, the eNB 200-1 and the eNB 200-2 is capable of sharing these ranges available of allocation.

Further, in the above-described second embodiment, the fixed D2DUE 101 transmits a discovery signal; however the present invention is not limited thereto. The fixed D2DUE 101 is capable of transmitting a radio signal in a D2D proximity service. For example, the fixed D2DUE 101 may transmit (and/or receive) a radio signal in the D2D communication, or may transmit a D2D synchronization signal, which is a signal transmitted in a D2D synchronization procedure for establishing terminal-to-terminal synchronization. Even in this case, the eNBs 200 (the eNB 200-1 and the eNB 200-2) are capable of performing similar operations as that of in the above-described second embodiment.

Further, even in the first embodiment, the fixed D2DUE may, for example, transmit predetermined information (for example, an advertisement) by a discovery signal, or may transmit a D2D synchronization signal. It is noted that the D2D synchronization signal includes a D2DSS and a physical D2D synchronization channel (PD2DSCH). The D2DSS is a signal for providing a synchronization standard of a time and a frequency. The PD2DSCH is a physical channel through which more information is to be conveyed than the D2DSS. It is noted that the UE 100 located out of cell coverage is capable of being in sync with a D2D synchronization source (the fixed D2DUE) on the basis of the received D2D synchronization signal.

Further, the operation of the above-described first and second embodiments may be combined and executed, where necessary. For example, the eNB 200-1 may transmit the fixed D2DUE list to the eNB 200-2, and the eNB 200-2 may allocate a resource to a UE 101 that is registered in the fixed D2DUE list, and that satisfies a predetermined condition (for example, a D2DUE for advertisement distribution).

In the above-described embodiment, an example in which the present invention is applied to the LTE system has been described; however, the present invention may also be applied to systems, other than the LTE system, as well as the LTE system.

In addition, the entire content of Japanese Patent Application No. 2013-245472 (filed on November 27, 2013) is incorporated in the present specification by reference.

### INDUSTRIAL APPLICABILITY

As described above, the communication control method and the base station according to the present invention are able to restrain a decline in network efficiency when an energy saving technology is introduced, and thus they are useful in a mobile communication field.

## Claims

1. A communication control method used in a mobile communication system having an OFF target base station that intends to set an OFF target cell to OFF that is a cell of the OFF target base station, and an extension target base station that is to perform a cell extension for compensating the OFF target cell, comprising:
a step of transmitting, by the OFF target base station, list information to the extension target base station before the cell extension is performed, the list information being maintained in the OFF target base station and being used when the OFF target cell is managed; and
a management step of managing, by the extension target base station, an extension target cell whose coverage is extended, on a basis of the list information.

2. The communication control method according to claim 1, wherein the list information is information indicating a list that is broadcast or unicast within a coverage of the OFF target cell by the OFF target base station, and
the management step includes a step of broadcasting or unicasting, by the extension target base station, the list information within a coverage of the extension target cell,

3. The communication control method according to claim 1, further comprising: a step of deleting the list information or returning the list information to the OFF target base station, by the extension target base station, after the management step ends.

4. The communication control method according to claim 1, wherein
the management step includes a step of updating the list information by the extension target base station, and
the communication control method further comprises a step of maintaining, by the extension target base station, the list information updated for a next cell extension, after the management step ends.

5. The communication control method according to claim 1, wherein the list information is information indicating a list concerning a fixed node whose location is fixed and which exists in the OFF target cell.

6. The communication control method according to claim 5, wherein the management step comprises:
a step of confirming, by the extension target base station, whether or not a fixed node registered in the list information is present within the coverage of the extension target cell, and
a step of deleting, by the extension target base station, information of a fixed node that is registered in the list information and is not present within the coverage of the extension target cell.

7. The communication control method according to claim 5, wherein the fixed node is a wireless LAN access point, or a fixed-type user terminal configured to transmit information by using a D2D proximity service.

8. The communication control method according to claim 5, wherein
the fixed node is a fixed-type user terminal whose movement is restricted, and
the communication control method further comprises:
a step of receiving, by the OFF target base station, from a user terminal that exists in the OFF target cell, capability information including information by which it is possible to determine whether or not the user terminal is a fixed-type user terminal;
a determination step of determining, by the OFF target base station, whether or not the user terminal is the fixed-type user terminal, on a basis of the capability information received from the user terminal; and
a step of updating, by the OFF target base station, a list concerning the fixed-type user terminal, on a basis of a determination result of the determination step.

9. The communication control method according to claim 5, further comprising:
a determination step of determining, by the OFF target base station, that a user terminal that continues to exist in the OFF target cell until the OFF target cell is set to OFF, and in which the number of handover to the OFF target cell exceeds a threshold value when an OFF state of the OFF target cell ends, is a fixed-type user terminal whose movement is restricted; and
a step of updating, by the OFF target base station, a list concerning the fixed-type user terminal, on a basis of a determination result of the determination step.

10. The communication control method according to claim 5, further comprising:
a determination step of determining, by the extension target base station, that a user terminal that continues to exist in the extension target cell during the time the extension target cell is extending, and in which the number of handover to the extension target cell exceeds a threshold value when the extension target cell is extended, is a fixed-type user terminal whose movement is restricted, wherein
in the management step, the extension target base station updates a list concerning the fixed-type user terminals on a basis of a determination result of the determination step.

11. The communication control method according to claim 1, further comprising:
a step of transmitting, by the OFF target base station, user information concerning a user terminal that exists in the OFF target cell before the cell extension is performed; and
a reserving step of reserving, by the extension target base station, for the user terminal, a resource for the extension target cell used after the cell extension is performed, on a basis of the user information.

12. The communication control method according to claim 11, further comprising:
a step of receiving, by the user terminal, the resource for the extension target cell, before the OFF target cell is set to OFF; and
an operation step of performing an operation, by the user terminal, by using the resource for the extension target cell, after the extension target cell is extended and during the time the user terminal exists in the extension target cell.

13. The communication control method according to claim 12, wherein
the resource for the extension target cell is a temporary identifier used for identifying the user terminal within the coverage of the extension target cell, and
in the operation step, if the user terminal exists in the extension target cell after the extension target cell is extended, the user terminal skips a random access procedure for establishing a connection to the extension target cell and performs an operation by using the temporary identifier.

14. The communication control method according to claim 12, wherein
the resource for the extension target cell is discovery information used in a process of discovering a partner terminal in a D2D proximity service, and
in the operation step, if the user terminal exists in the extension target cell after the extension target cell is extended, the user terminal starts the process of discovering on a basis of the discovery information, without a connection to the extension target cell.

15. The communication control method according to claim 12, further comprising:
a step of associating and storing, by the user terminal, a resource for the OFF target cell that is allocated from the OFF target base station before the OFF target cell is set to OFF, together with the resource for the extension target cell; and
a step of performing an operation, by the user terminal, by using the resource for the OFF target cell, when the user terminal again exists in the OFF target cell after the extension of the extension target cell ends.

16. The communication control method according to claim 11, wherein the resource for the extension target cell is a resource common to a resource for the OFF target cell that is allocated to the user terminal from the OFF target base station before the OFF target cell is set to OFF.

17. The communication control method according to claim 11, further comprising: a step of separating beforehand before the reserving step, by the OFF target base station and the extension target base station, the range available for allocating a resource for the OFF target cell and the range available for allocating the resource for the extension target cell, in order to prevent overlapping of the resource for the OFF target cell that is allocated to the user terminal from the OFF target base station, and the resource for the extension target cell.

18. The communication control method according to claim 17, further comprising: a step of receiving, by at least one of the OFF target base station and the extension target base station, from a network, information indicating at least one of the range available for allocating the resource for the OFF target cell and the range available for allocating the resource for the extension target cell.

19. The communication control method according to claim 11, wherein the user terminal is a fixed-type user terminal whose movement is restricted.

20. The communication control method according to claim 1, further comprising: a step of selecting, by the OFF target base station, as the extension target base station, a base station that is controlled by a movement management entity configured to control the OFF target base station, or a base station that belongs to the same tracking area as the OFF target base station.

21. A base station configured to be used in a mobile communication system having an OFF target base station that intends to set an OFF target cell to OFF that is a cell of the OFF target base station, and an extension target base station that is to perform a cell extension for compensating the OFF target cell, and corresponding to the OFF target base station, the base station comprising:
a transmitter configured to transmit, by the OFF target base station, list information to the extension target base station before the cell extension is performed, the list information being maintained in the OFF target base station and being used when the OFF target cell is managed, wherein
the list information is used by the extension target base station when an extension target cell whose coverage is extended is managed.

22. A base station configured to be used in a mobile communication system having an OFF target base station that intends to set an OFF target cell to OFF that is a cell of the OFF target base station, and an extension target base station that is to perform a cell extension for compensating the OFF target cell, and corresponding to the extension target base station, the base station comprising:
a receiver configured to receive list information from the OFF target base station before the cell extension is performed, the list information being maintained in the OFF target base station and being used when the OFF target cell is managed; and
a controller configured to manage, on a basis of the list information, an extension target cell whose coverage is extended.
